(19) Europäisches Patentamt / European Patent Office / Office européen des brevets

(11) **EP 4 256 109 B1**

(12) **EUROPEAN PATENT SPECIFICATION**

(45) Date of publication and mention
of the grant of the patent:
**08.01.2025 Bulletin 2025/02**

(21) Application number: **21819487.6**

(22) Date of filing: **02.12.2021**

(51) International Patent Classification (IPC):
**C25B 1/04** *(2021.01)*   **C25B 9/19** *(2021.01)*
**C25B 15/023** *(2021.01)*   **C25B 15/025** *(2021.01)*

(52) Cooperative Patent Classification (CPC):
**C25B 1/04; C25B 9/19; C25B 15/023;**
**C25B 15/025;** Y02E 60/36

(86) International application number:
**PCT/EP2021/083903**

(87) International publication number:
**WO 2022/117702 (09.06.2022 Gazette 2022/23)**

(54) **MEMBRANE-TYPE WATER ELECTROLYSIS DEVICE FOR THE PRODUCTION OF GASEOUS HYDROGEN OR OXYGEN AT A CONTROLLED HUMIDITY LEVEL**

MEMBRAN-WASSERELEKTROLYSEVORRICHTUNG ZUR ERZEUGUNG VON GASFÖRMIGEM WASSERSTOFF ODER SAUERSTOFF BEI KONTROLLIERTEM FEUCHTIGKEITSGRAD

DISPOSITIF D'ÉLECTROLYSE DE L'EAU DE TYPE À MEMBRANE POUR LA PRODUCTION D'HYDROGÈNE OU D'OXYGÈNE GAZEUX À UN TAUX D'HUMIDITÉ RÉGULÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.12.2020 IT 202000029726**

(43) Date of publication of application:
**11.10.2023 Bulletin 2023/41**

(73) Proprietor: **Hydep S.r.l.**
**26900 Lodi (LO) (IT)**

(72) Inventors:
• **MILLET, Pierre**
**91470 Forges-les-Bains (FR)**
• **DRAGONI, Matteo**
**26823 Castiglione d'Adda LO (IT)**
• **DRAGONI, Mario**
**26823 Castiglione d'Adda LO (IT)**

(74) Representative: **Rondano, Davide et al**
**Società Italiana Brevetti S.p.A.**
**Via Carducci 8**
**20123 Milano (IT)**

(56) References cited:
**EP-A1- 3 647 468      CN-C- 1 312 321
US-A1- 2012 241 315   US-A1- 2019 192 806
US-B2- 6 685 821**

**Description**

**Technical field of the invention**

The present invention relates water electrolysis device, and more specifically to a membrane-type water electrolysis device, for the production of gaseous hydrogen or oxygen at a controlled humidity level.

**State of the art**

Hydrogen is considered to be the energy vector of the future, enabling massive storage of renewable energy sources. In contrast to steam methane reforming, the dissociation of water by electrolysis allows the production of electrolytic quality hydrogen and oxygen, without any trace of carbon compounds. The apparatus that allows the dissociation of water into hydrogen and oxygen under the effect of an electric current is an electrochemical reactor called water electrolyzer or, simply, electrolyzer. There are several technologies for water electrolysis, namely alkaline water electrolysis, polymer membrane electrolysis and ceramic membrane electrolysis.

Alkaline water electrolysis (AWE) operates between room temperature and typically 80°C and consists in the electrolysis of aqueous solutions of potassium hydroxide or sodium hydroxide. The anodic and cathodic compartments are separated by a porous diaphragm, impregnated with electrolytic solution and permeable to the passage of electric current by ion transport.

Polymer membrane electrolysis (PEM = Proton Exchange Membrane or Polymer Electrolyte Membrane) operates between room temperature and typically 90°C and consists in replacing the conventional liquid electrolyte with an ionic conduction membrane of the ionomer type. There are cationic conduction membranes (in water electrolysis, the protonic form is preferred; perfuorosulfonated polymer materials, PFSA = perfluorosulfonic acid, of the Nation type are the most common ones) and anionic conduction membranes (in water electrolysis, the hydroxylic form is preferred; there are several types of commercial polymers, e.g. Sustainion® or Flémion® mainly used in chlorine-soda electrolysis). Hyflon® type membranes (short-chain PFSA) can operate up to about 150°C; PBI type membranes doped with phosphoric acid can operate up to about 230°C.

A variant of the PEM technology is also known, which uses a membrane with ion-selective conductivity by hydrated hydroxyls (OH-) ions. The technology is called AEM (Anion Exchange Membrane) or AEMWE (Anion Exchange Membrane Water electrolysis).

Ceramic membrane electrolysis typically operates between 600°C and 1000°C and uses a thin layer of solid inorganic material (e.g. doped alumina) with oxide ion conduction.

The present invention more specifically relates to polymer membrane electrochemical reactors. This type of reactor is well known and has many advantages such as good energy efficiency and great operating flexibility (flexibility, reactivity, cold start capability) with variable electrical load profiles, allowing it to be used for water electrolysis in combination with photovoltaic panels or wind turbines, or to provide various services to the electrical networks such as grid balancing or frequency regulation.

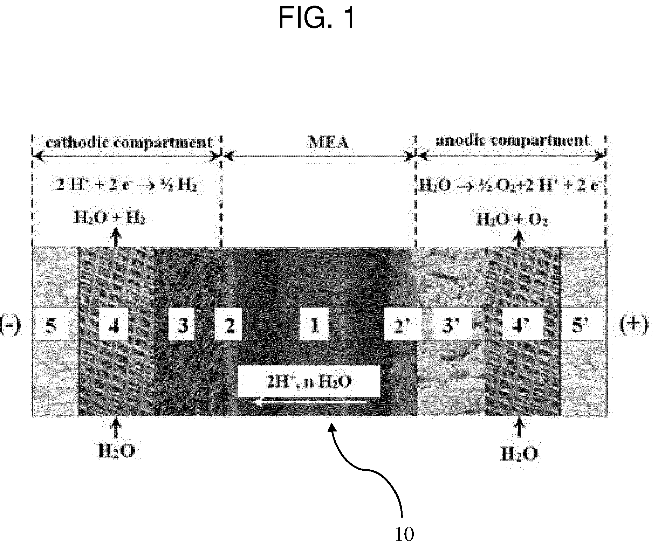

Figure 1 of the appended drawings is a cross-section view of a water electrolysis cell with polymer electrolyte membrane (C. Rozain, P. Millet, "Electrochemical characterization of Polymer Electrolyte Membrane Water Electrolysis Cells", Electrochimica Acta, 131 (2014) 160-167). With reference to Figure 1, the water electrolysis cell is generally indicated 10 and basically comprises an ion conduction membrane 1, with or without mechanical reinforcement, a cathodic catalytic layer 2 and an anodic catalytic layer 2', a cathodic porous layer 3 and an anodic porous layer 3', a cathodic porous spacer 4 and an anodic porous spacer 4' (e.g. metal grids), and two metallic bipolar plates 5 and 5'.

The assembly is usually mounted in a frame made of non-conductive technical polymer material equipped with distribution channels, a water injection and gas collection system, and seals (D. Bessarabov, P. Millet, PEM Water Electrolysis, "Hydrogen and Fuel Cells Primers", B.G. Pollet Editor, 1st Edition, Elsevier (2018)).

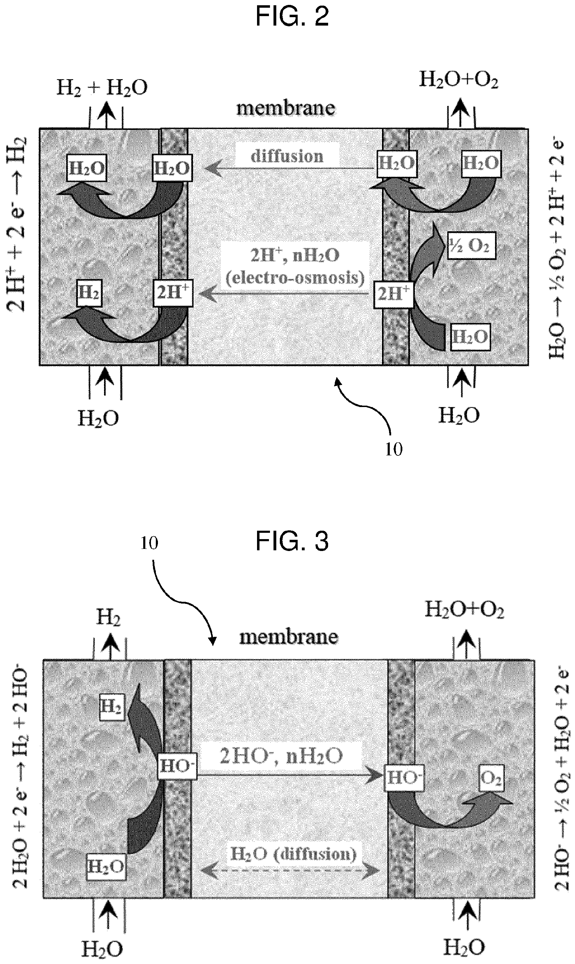

To fully understand the operation and limitations of a polymer electrolyte cell, be it a cationic one (PEM) or an anionic one (AEM), the flows of chemical species during electrolysis should be analyzed as a function of the electrode half reactions. In the current state of the art, hydrogen and oxygen leaving the membrane water electrolysis cells are saturated with water. Figure 2 shows the situation typically occurring in a PEM water electrolysis cell with wet anode and wet cathode, while Figure 3 shows the situation typically occurring in an AEM water electrolysis cell with wet anode and wet cathode.

Depending on the needs of downstream processes or users, the gases leaving the membrane water electrolysis cells are then more or less dried to meet the required standards. This results in additional costs in terms of capex (apparatus needed for drying) and opex (energy needed for drying).

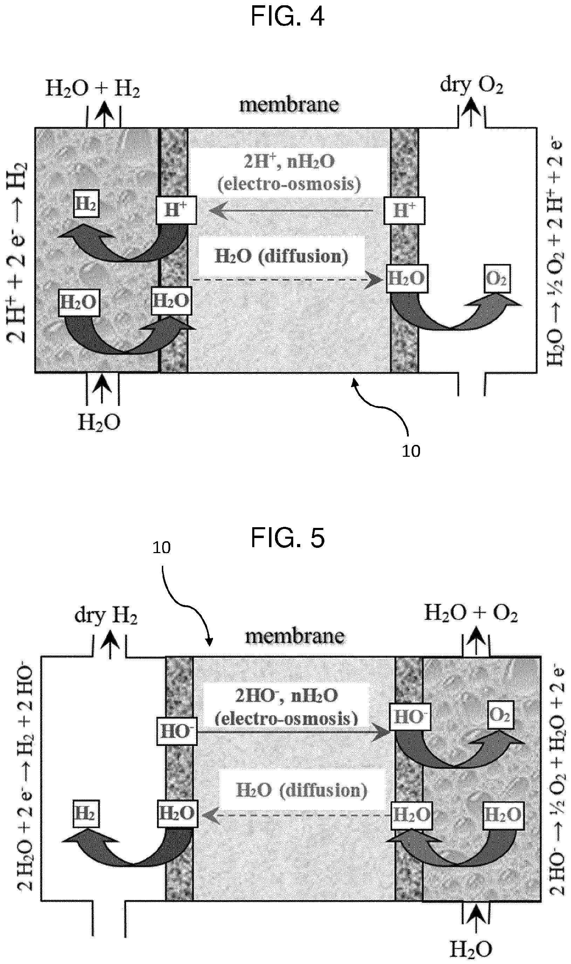

The idea of feeding the catalytic layer, where the dissociation reaction of water molecules takes place, by diffusional transport of water through the polymer membrane from the opposite side has been proposed for the production of dry oxygen from a PEM water electrolysis cell. In this regard, Figure 4 shows a schematic diagram of a PEM water electrolysis cell with dry anode and wet cathode. The same idea has been used for the production of dry hydrogen from an AEM water electrolysis cell. In this regard, Figure 5 shows a schematic diagram of an AEM water electrolysis cell with wet anode and dry cathode. Such a solution is disclosed in EP2451992B1.

However, this idea has several limitations. In practice, used as it is, the solution known from EP2451992B1 does not allow to produce dry hydrogen. Experience shows that water vapour or even liquid water exits the membrane on the side where a dry gas is supposed to be produced. This solution does not allow to produce hydrogen or oxygen at controlled humidity levels either, because it is difficult to control the flow of water through the membrane. Furthermore, at high current densities, energy consumption becomes more important because additional energy must be provided to accelerate the transport of water by diffusion; from an economic point of view, this nullifies the positive effect of dry gas production.

Many applications require hydrogen or oxygen with a controlled hygrometric degree (humidity level), i.e. with a water vapour content between 0% (i.e. dry gas) and 100% (i.e. gas saturated with water vapour at operating temperature T and operating pressure p). An example is the production of medical oxygen. Another example is the production of hydrogen and oxygen for feeding fuel cells, which must have a precise hygrometric degree. However, in the state of the art, hydrogen and/or oxygen leaving an electrolyzer are saturated with water and carry with them droplets of water in suspension. The adjustment of the hygrometric degree of hydrogen and/or oxygen leaving an electrolyzer requires one or more drying steps, typically a filtering step which eliminates the droplets and then a condensation step by cooling at low temperature thanks to a refrigerating system, which is generally energy consuming. It is also possible to proceed by producing dry gases and then controlling their hydration, for example by splashing or circulation in exchangers with a controlled water vapour content. These techniques have a significantly high cost, both in terms of investment and in terms of energy consumption.

US2012/241315 discloses a water electrolysis device with an electrolysis cell having a membrane electrode assembly. US6685821 discloses a system for producing highpressure hydrogen comprising a water electrolysis stack.

## Summary of the invention

It is an object of the present invention to solve the aforementioned problems of the prior art, allowing to produce gaseous hydrogen or oxygen at controlled humidity levels.

This and other objects are fully achieved, according to a first aspect of the present invention, by virtue of a water electrolysis device having the features set forth in independent claim 1 and, according to another aspect of the present invention, by virtue of a water electrolysis method comprising the steps set forth in independent claim 8.

Further advantageous features of the water electrolysis device according to the present invention are defined in the dependent claims.

In short, the invention is based on the idea of providing a PEM-type or AEM-type water electrolysis device wherein the current density and the water flow pumped into the water supply compartment of the device are suitably controlled in such a manner as to adjust the humidity level in the gaseous hydrogen or oxygen at the outlet of the membrane water electrolysis cell to any desired value comprised between 0% and 100%. in other words, according to the present invention by suitably controlling the current density and the water flow pumped into the water supply compartment the humidity level in the gaseous hydrogen or oxygen at the outlet of the membrane water electrolysis cell is adjusted to be equal to a desired value comprised between 0% and 100%.

The characteristics and the advantages of the present invention will be evident to those skilled in the art from the following detailed description, given purely by way of nonlimiting example.

## Brief description of the drawings

In the following detailed description reference will be made to the appended drawings, wherein:

-  Figure 1 is a cross-section view of a water electrolysis cell with polymer electrolyte membrane:

-  Figure 2 is a schematic representation of a PEM water electrolysis cell with wet anode and cathode;

-  Figure 3 is a schematic representation of a AEM water electrolysis cell with wet anode and cathode;

-  Figure 4 is a schematic representation of a PEM water electrolysis cell with dry anode and wet cathode;

-  Figure 5 is a schematic representation of an AEM water electrolysis cell with wet anode and dry cathode;

-  Figure 6 is a graph showing the relationship between cell voltage and current density in a PEM water electrolysis cell for various operating temperatures, both in case of water circulation on both sides of the cell and in case of water circulation in the hydrogen side only (a similar behaviour is observed experimentally with an AEM water electrolysis cell in case of water circulation in the oxygen side only);

- Figure 7 is a graph showing the typical impedance diagrams measured on a PEM water electrolysis cell when water is circulated in the hydrogen compartment only, at increasing cell voltages (the high frequency impedance related to electrochemical reactions decreases but the low frequency part of the graphs shows mass transport-limitations);

- Figure 8 shows the current-voltage characteristic of an AEM water electrolysis cell;

- Figure 9 shows concentration overvoltage as a function of current density in an AEM water electrolysis cell; and

- Figure 10 is a schematic representation of two water electrolysis cells (one PEM and one AEM) connected in series to form a bi-cell to simultaneously produce hydrogen and oxygen at controlled humidity levels.

## Detailed description

The innovative approach on which the present invention is based is to use a PEM water electrolysis cell (hereinafter also referred to simply as PEM cell) with dry anode for the production of oxygen at a controlled humidity level. Symmetrically, the same approach is to use an AEM water electrolysis cell (hereinafter also referred to simply as AEM cell) with dry cathode for the production of hydrogen at a controlled humidity level.

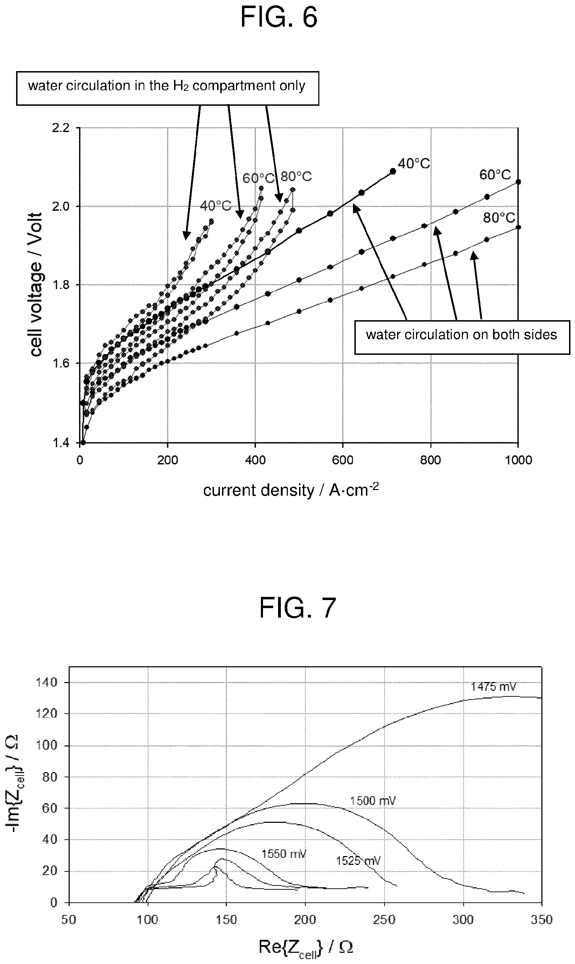

Experience shows that for PEM or AEM cells fed by water circulation in both compartments, the current density does not show any saturation effect (i.e. no tendency for the current density to approach a limit value). On the other hand, when these cells are supplied with water in only one compartment according to Figures 4 and 5, a phenomenon of current saturation appears (as shown in Figure 6) whose value depends on the type of polymer, the types of catalyst (anode and cathode), the operating temperature and the operating pressure. In the area of current density where the limitation of water transport appears, the impedance of the cell increases significantly (as shown in Figure 7), indicating a loss of efficiency.

The results in Figure 6 show that the diffusion rate of water through the membrane becomes kinetically limiting. The value of the saturating current density (maximum value of the current density that can be obtained) depends on several parameters including temperature, but also water pressure in the water supply compartment. When current density approaches the saturation value, all the water that flows through the membrane is electrolyzed on the opposite electrode, hence the idea of using these experimental results to produce more or less dry gases depending on the value of the current density.

To control the current density, and thus the hygrometric degree of the produced gases, it is necessary to determine the role of the main experimental parameters. For this purpose, it is necessary to build a physical-chemical model to account for the phenomenon of saturation in current density.

The innovative idea results from the analysis of flows of chemical species in membrane water electrolysis cells and the understanding of the equilibrium conditions between the water-saturated polymer membrane and the gas compartment in which the water content has to be controlled. From a microstructural point of view, polymer membranes (ionomers or polymers impregnated with an electrolyte) are biphasic materials comprising two nanostructured and interpenetrated phases (separate percolation of each of the two phases). The first hydrophobic phase consists in the carbon (or fluoro-carbon) skeleton of the polymer material. Water cannot dissolve in it. The second hydrophilic phase is constituted by the percolation of agglomerated ionic domains called "clusters" or "ionic clusters" which result from the organization in the form of inverted micelles of the ionized pendant chains. When this type of membrane is used in a polymer electrolyte water electrolysis cell (PEM or AEM), water is transported through the membrane into the hydrophilic phase.

The mechanisms of water transport through a polymer membrane are mainly of two types: (i) a purely diffusive transport whose driving force is a chemical potential gradient (resulting for example from a pressure gradient) which can be either local or imposed on either side of the membrane; (ii) an electro-osmotic transport whose driving force is the electric current density resulting from the polarization (electric field) applied on either side of the membrane. The term "electro-osmotic flow" refers to the flow of water through the membrane during electrolysis due to the circulation of hydrated ions (charge carriers). The solvation water molecules of the ionic charge carriers circulating through the membrane during electrolysis are released into the compartment where the ionic species is consumed. The electro-osmotic flux can be measured in litres per hour or expressed by the number of solvation molecules (usually water) per each mobile ion (the proton $H^+$ in a PEM membrane and the hydroxyl ion $OH^-$ in an AEM membrane).

The transport of water by diffusion and electro-osmosis through the membrane is governed by physical-chemical processes such as the Fourier's law of diffusion, the Darcy's law of flow in porous media, and the Faraday's law of conservation of electrical charges. When the water required for the operation of a water electrolysis electrode (oxygen anode, Figure 4, in the case of a PEM cell, and hydrogen cathode, Figure 5, in the case of an AEM cell) arrives at the catalytic layer through the membrane, there is a quantitative relationship between the water flow rate in the water supply compartment, the associated pressure drop, the membrane properties (thickness, equivalent weight, load carrier concentration, operating temperature $T$ and pressure p) and the operating current density (often denoted as j and measured in A/cm$^2$). This proportionality relationship is determined in the following way using a mass balance.

i) Mass balance in water at the AEMWE cathode through a membrane

The amount of water that comes out of the membrane and flows into the cathodic compartment is equal to the amount of water that reaches through diffusion minus the amount of water that is consumed by the reaction and the amount of water that leaves by electro-osmosis.

ii) Fick's equation of order 1 (stationary state)

$$(a) \quad J_i = -D_i \nabla C_i \, ,$$

where $J_i$ is the molar flux density of species i (in mole/(cm$^2$·s)), $D_i$ is the diffusion coefficient of species i (in cm$^2$/s), and $C_i$ is the molar concentration of species i.
The driving force of diffusion is the molar concentration gradient in species i.

iii) Definition of the coefficient of permeability $P_i$

Polymer membranes can be assimilated to a porous medium. The transport relationship is then expressed as a function of the coefficient of permeability $P_m$ by the following equation:

$$(b) \quad P_m = D{\cdot}S,$$

where D is the diffusion coefficient (in cm$^2$/s) and S is the solubility (in mol/(cm$^3$·Pa)). The flow of water by diffusion is thus expressed by the following equation:

$$(c) \quad \frac{J_{H_2O}\left(\frac{mol}{s}\right)}{A(cm^2)} = Pm\frac{\Delta p}{L} = D_{H_2O}S_{H_2O}\frac{\Delta p}{L} \, ,$$

where L is the thickness of the membrane (in cm) and $\Delta p$ is the pressure difference between the two compartments of the water electrolysis cell.

iv) Mass balance

The mass balance of water is therefore written as follows:

$$(d) \quad J_{H_2O}^{out} = +P_m\frac{\Delta p}{L} - \frac{j}{2F} - \frac{nj}{2F} = P_m\frac{\Delta p}{L} - \frac{j}{2F}(1+n),$$

where $J_{H_2O}^{out}$ is the water flow out of the membrane (in mole(cm$^2$·s)), $n$ is the number of water molecules per molecule of charge-carrying ion, j is the current density (in A/cm$^2$), and F is the Faraday constant = 96485,33 (in s.A/mol).

v) Condition that cancels the flow of water out of the membrane

In order to obtain a dry gas in the compartment where the water arrives by diffusion, it is necessary to find the conditions that cancel out the flow of water coming out of the membrane being, i.e. the conditions that ensure the following result:

$$(e) \quad J^{out}_{H_2O} = 0.$$

In this case, the current density j takes a particular value called limit current density and indicated $j_L$:

$$(f) \quad \frac{j_L}{2F}(1+n) = \frac{D_{H_2O}}{RT}\frac{\Delta p}{L} \ ,$$

where:

$$(g) \quad j_L = P_m \frac{\Delta p}{L}\frac{2F}{(1+n)} = P_m \frac{(p^{up} - p^{down})}{L}\frac{2F}{(1+n)}.$$

Assuming that one is looking for a dry gas in the cathodic compartment, the pressure $p^{down}$ in this cathodic compartment must be equal to zero. By expressing $p^{up}$ in relation to vacuum (dry gas), one obtains:

$$(h) \quad j_L = P_m \frac{p^{up}}{L}\frac{2F}{(1+n)} \ .$$

vi) Expression of the water pressure in the cell as a function of the flow rate of the pumped water

The above equation (h) shows that the pressure $p^{up}$ plays a key role in the process of diffusional transport of water through the membrane, since it determines the amplitude of the water transfer (driving force of the transfer). It is therefore necessary to know the value of the pressure in the compartment where the water circulates. In practice, the compartment in question contains a certain number of elements (PTL, grids) that increase the pressure drop (D. Bessarabov, P. Millet, PEM Water Electrolysis, "Hydrogen and Fuel Cells Primers", B.G. Pollet Editor, 1st Edition, Elsevier (2018)). There is a relationship of second order between the flow rate of the circulating water and the pressure difference $\Delta$p across the cell. The quantitative relationship depends on the internal hydraulic resistance of the cell. If this resistance is known, the flow measurement gives access to the pressure difference $\Delta$p and thus to the average pressure $p^{up}$ in the cell. On the other hand, the compartment where oxygen is produced may itself be under pressure. Depending on the technology used, the pressure on the oxygen side may be close to or lower than that in the hydrogen compartment. Pressure $p^{up}$ is therefore equal to the pressure in the anode compartment, due to the oxygen pressure and the hydraulic pressure drop.

vii) Mass transfer overvoltage during water electrolysis

From these considerations, it appears that when water is brought to the electrode where it is consumed (the cathode in the case of an AEM cell) by transport through the membrane rather than directly by pumping into the cathode compartment, there is a critical current density, i.e. the above-mentioned limit current density $j_L$. The existence of a limit current density $j_L$ induces an electrical mass transport overvoltage. There are analytical expressions of this overvoltage in the literature (and in particular in that relating to fuel cells, a fuel cell being a type of cell whose electrochemical reaction is powered by gas transport to the electrodes), for example (F. Barbir, PEM Fuel Cells, Elsevier, 2005, p. 45-47):

$$(i) \quad \Delta U_{conc} = \frac{RT}{nF} ln \left( \frac{j_L}{j_L - j} \right) \ .$$

There are also empirical expressions such as:

$$\text{(j)} \quad \Delta U_{conc} = C \, exp\left(\frac{j}{D}\right),$$

where C and D are adjustable empirical coefficients.

viii) Mass transfer overvoltage during electrolysis of water

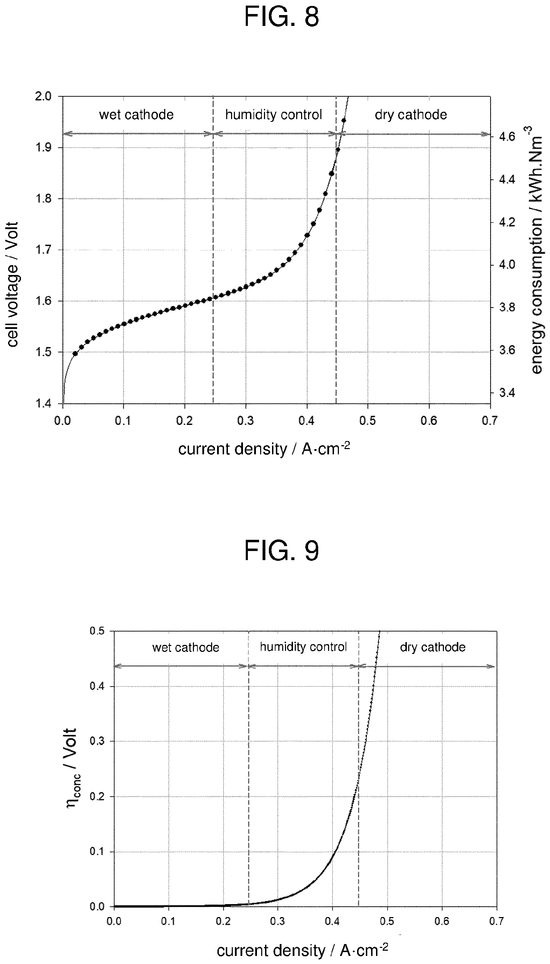

Taking $p^{up}$ = 20 bar, it is possible to calculate, using equation (h), the value of the limit current density $j_L$ that allows to obtain a dry gas in the cathodic compartment. Assuming $P_m$ = 9,1 x 10$^{-14}$ mol/(s·cm·Pa), L = 0,02 cm and $n$ = 4, it follows that $j_L$ = 0,35 A/cm$^2$. This is the current density which corresponds to the inflexion point in the graph of Figure 8. It should be noted here that for a given cell, when the water flow is changed, the position of the inflexion point and the two limits of the central region are shifted along the current density scale.
The following procedure can therefore be carried out to reach a target humidity level.

a) The cell/stack is placed on a typical test bench used for operation of water electrolyzers (D. Bessarabov, P. Millet, PEM Water Electrolysis, "Hydrogen and Fuel Cells Primers", B.G. Pollet Editor, 1st Edition, Elsevier (2018)).
b) The water flowing across the water supply compartment is set to the nominal value which is usually determined by the maximum acceptable temperature difference between cell inlet and outlet (A. Villagra, P. Millet, "An analysis of PEM water electrolysis cells operating at elevated current densities", Int. J. Hydrogen Energy, 44(20) (2019) 9708-9717).
c) The cell voltage to be applied is determined from the cell voltage/current density characteristic curve of the cell/stack (a typical example of which is shown in Figure 8). There are two characteristic points: the first one at 0,25 A/cm$^2$ and 1,6 Volt and the second one at 0,45 A/cm$^2$ and 1,9 Volt. These two points delimit the current density range in which it is possible to adjust the humidity level. The Y-axis of the graph of Figure 8 expressed in Volt can be replaced by a scale in water %.
d) Then the desired cell voltage is applied to the cell. In this example, when the cell voltage is higher than 1,6 Volt, 100% hydrated gas is produced; when the cell voltage is higher than 1,9 Volt, dry gas is produced; and when the cell voltage is comprised between 1,6 and 1,9 Volt, the humidity level of the gas is between 0 and 100% and proportional to the cell voltage. This is a not linear proportionality as shown in Figure 8.

The water content in the gas comes from the membrane, which is saturated with water. The production of a dry gas on one side of the membrane is therefore difficult to achieve because the water present on the surface of the membrane in contact with the dry gas tends to evaporate (in this case the gas produced contains a water vapour pressure) or even (when the water flow is too high) to pass directly as liquid water into the compartment where the gas is produced, the hygrometric degree of which we are trying to control. It is therefore necessary to find a way to allow the liquid water that comes through the membrane to reach the catalytic layer but to prevent the too rapid evaporation of water from the catalytic layer. For this purpose, according to an aspect of the present invention a water retainer can be introduced into the catalytic layer of the PEM or AEM cell where the water molecule is dissociated. The water retainer is a chemical compound, preferably solid, hydrophilic, with a high storage capacity of liquid water (therefore present in the form of small particles, for example nanoparticles, with high porosity). This material must have a water sorption isotherm at the operating temperature and pressure of the cell with a low water vapour pressure.
Examples of water retaining materials are metal oxides (such as silica SiO$_2$, titanium oxide TiO$_2$), superabsorbent polymeric materials (e.g. polyelectrolytes such as sodium polyacrylates), cellulose ethers, methyl cellulose, hydoxyethyl methyl cellulose, hypromellose or hydroxypropyl methyl cellulose (HPMC), certain clays (natural silicate or alumino-silicate based minerals), or any other material with marked hydrophilic properties. The content of water retaining materials in the catalytic layer must be optimized according to the intended application and the desired moisture content.
The present invention describes a process allowing the production of hydrogen or oxygen with a controlled humidity level between 0% (dry gas) and 100% (wet gas saturated with water). The process is carried out by means of a membrane-type water electrolysis device containing any number of elementary cells, which may be of any nature, constituent materials, size and shape (for example planar, cylindrical or even spherical). The mass balances carried out on the electrodes in contact with the gases whose humidity level must be controlled show that it is necessary to control the water electrolysis cell by controlling two key parameters: (i) the water pressure in the opposite compartment so as to control the diffused water transport (water flow rate through the membrane), and (ii) the current density that sets the electro-osmotic flow of water.
A first aspect of the present invention is based on the analysis and understanding of the mechanisms of water transport through a polymer membrane, which are of two types: (i) a diffusive transport whose driving force is a pressure gradient; and (ii) an electro-osmotic transport whose driving force is the electric current density. According to the technical characteristics indicated above, the current-voltage curve has a characteristic limit current density. By operating the cell at a current density higher than the limit current density, it is possible to produce a dry gas. By operating the cell at a current density close to the limit current density, a gas with controlled humidity can be produced. By operating the cell at a current density below the limit current density, it is possible to produce a gas saturated with water vapour or even a two-phase water-gas mixture. The control of the current density with which the cell is operated therefore allows to adjust the humidity level (hygrometric degree) of the produced gases according to the needs.

Another aspect of the present invention is based on the introduction into the catalytic layer where the water is consumed of a water-retaining hydrophilic additive that will prevent the evaporation of water from the membrane into the dry gas and will make it possible to control the humidity level (hygrometric degree) of the gas produced.

A further aspect of the present invention is based on the provision of a stack of cells alternating proton and anion conduction membranes. Thus, the same reactor allows the simultaneous production of hydrogen and oxygen at a controlled hygrometric degree.

The results obtained with membrane water electrolysis cells controlled according to the invention are provided below by way of examples.

Example 1

In a first example, the current-voltage characteristic of an AEM water electrolysis cell powered by water transport through the membrane was measured (Figure 7) and modelled using the mass balance equation (h) presented earlier.

Example 2

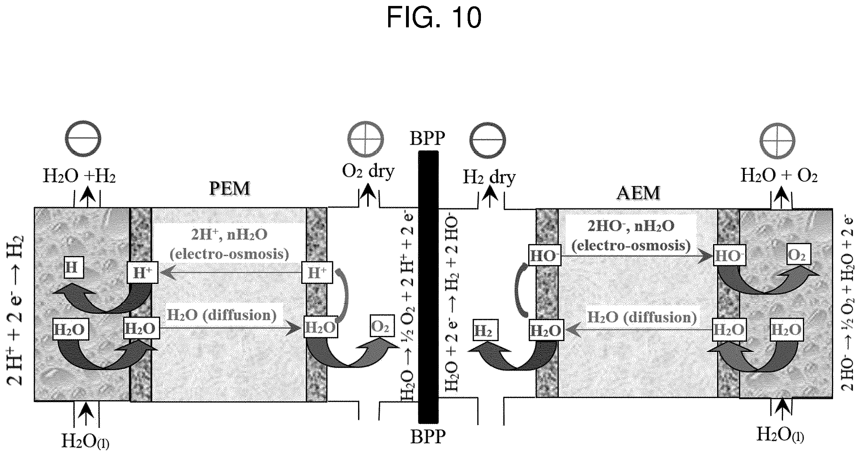

In a second example, two water electrolysis cells (one PEM and one AEM) were connected in series to form a bi-cell to simultaneously produce hydrogen and oxygen at controlled humidity levels (Figure 10). Several such bi-cells can be stacked in any number to adjust the capacity to produce moisture-controlled gases as required.

The present invention has been disclosed herein with reference to some preferred embodiments thereof, It is however clear that other embodiments may be provided for, which share with the ones herein disclosed the same inventive idea, as defined by the appended claims.

**Claims**

1. Electrolysis device for the production of gaseous hydrogen or oxygen at a controlled humidity level, the device comprising:

   - at least one water electrolysis cell (10) having a ion-conducting polymer membrane, said at least one water electrolysis cell (10) being actuated by diffusional transport of water through said membrane,
   - liquid water supply means for supplying liquid water in a water supply compartment of said at least one water electrolysis cell (10) opposite to the electrode where electrolytic decomposition of the water takes place, and
   - control means configured to control the current density and the water flow pumped by said water supply means into said water supply compartment to adjust the humidity level in the gaseous hydrogen or oxygen at the outlet of said at least one water electrolysis cell (10) to a desired value comprised between 0% and 100%, wherein said at least one water electrolysis cell (10) includes, in addition to said membrane:
   - a frame made of non-conductive engineering polymer material having fluid distribution and collection channels and seals,
   - a cathodic catalytic layer and an anodic catalytic layer,
   - a cathodic porous layer and an anodic porous layer,
   - a cathodic porous spacer and an anodic porous spacer, and
   - two metallic bipolar end plates, and

   wherein either or both of the catalytic layers contain a water-retaining hydrophilic additive.

2. Device according to claim 1, wherein the membrane is made of a polymeric proton-conducting material, wherein the cathodic catalytic layer comprises a platinum-based catalyst and a polymeric binder of the same chemical nature as said membrane, and wherein the anodic catalytic layer comprises an iridium oxide-based catalyst and a polymeric binder of the same chemical nature as said membrane.

3. Device according to claim 1, wherein the membrane is made of a polymeric material anionically conductive by hydroxyl ions, wherein the cathodic catalytic layer comprises a catalyst based on oxides of Ni, Co, Fe or their mixtures, and a polymer binder of the same nature as said membrane, and wherein the anodic catalytic layer comprises a catalyst based on oxides of Cu, Co, Ni, Mn or their mixtures, and a polymeric binder of the same nature as said membrane.

4. Device according to any one of the preceding claims, wherein either or both of the catalytic layers are deposited directly on the membrane or on the surface of the porous layers on either side of said membrane.

5. Device according to any one of the preceding claims, wherein said water-retaining hydrophilic additive is formed by silica ($SiO_2$), or titanium oxide ($TiO_2$), or polyelectrolytes such as sodium polyacrylates, or cellulose ethers, or methyl cellulose, or hydoxyethyl methyl cellulose, or hypromellose or hydroxypropyl methyl cellulose (HPMC), or certain silicate or alumino-silicate based clays, or combinations thereof.

6. Device according to any one of the preceding claims, containing one or more PEM water electrolysis cells and/or one or more AEM water electrolysis cells.

7. Device according to any one of the preceding claims, wherein said control means are configured to apply between the two electrodes of said at least one water electrolysis cell (10) an electric potential difference in the range of 1,5 to 3,0 V, corresponding to a current density between 0 and 10 A/cm$^2$.

8. Method for producing gaseous hydrogen or oxygen at a controlled humidity level by means of at least one water electrolysis cell (10) which has a ion-conducting polymer membrane and is actuated by diffusional transport of water through said membrane, the method comprising the steps of:

   a) supplying liquid water in a water supply compartment of said at least one water electrolysis cell (10) opposite to the electrode where electrolytic decomposition of the water takes place, and
   b) controlling the current density and the water flow pumped into said water supply compartment to adjust the humidity level in the gaseous hydrogen or oxygen at the outlet of said at least one water electrolysis cell (10) to a desired value comprised between 0% and 100%.

**Patentansprüche**

1. Elektrolysevorrichtung für die Produktion von gasförmigem Wasserstoff oder Sauerstoff bei kontrolliertem Feuchtigkeitsgehalt, die Vorrichtung umfassend:

   - mindestens eine Wasserelektrolysezelle (10), die eine ionenleitende Polymermembran aufweist, wobei die mindestens eine Wasserelektrolysezelle (10) durch Diffusionstransport von Wasser durch die Membran angetrieben wird,
   - flüssige Wasserversorgungsmittel zum Zuführen von flüssigem Wasser in einen Wasserversorgungsraum der mindestens einen Wasserelektrolysezelle (10) gegenüber der Elektrode, an der die elektrolytische Zersetzung des Wassers stattfindet, und
   - Steuermittel, die konfiguriert sind, um die Stromdichte und den Wasserfluss zu steuern, der durch die Wasserversorgungsmittel in den Wasserversorgungsraum gepumpt wird, um den Feuchtigkeitsgehalt des gasförmigen Wasserstoffs oder Sauerstoffs an dem Auslass der mindestens einen Wasserelektrolysezelle (10) auf einen gewünschten Wert einzustellen, der zwischen 0 % und 100 % umfasst, wobei die mindestens eine Wasserelektrolysezelle (10) zusätzlich zu der Membran einschließt:
   - einen Rahmen, der aus nichtleitendem technischem Polymermaterial hergestellt ist, der Flüssigkeitsverteilungs- und -sammelkanäle und Dichtungen aufweist,
   - eine kathodische katalytische Schicht und eine anodische katalytische Schicht,
   - eine kathodische poröse Schicht und eine anodische poröse Schicht,
   - einen kathodischen porösen Abstandshalter und einen anodischen porösen Abstandshalter, und
   - zwei metallische bipolare Endplatten und
   wobei eine oder beide katalytische Schichten einen wasserspeichernden hydrophilen Zusatzstoff enthalten.

2. Vorrichtung nach Anspruch 1, wobei die Membran aus einem polymeren protonenleitenden Material hergestellt ist, wobei die kathodische katalytische Schicht einen Katalysator auf Platinbasis und ein polymeres Bindemittel derselben chemischen Beschaffenheit wie die Membran umfasst, und wobei die anodische katalytische Schicht einen Katalysator auf Iridiumoxidbasis und ein polymeres Bindemittel derselben chemischen Beschaffenheit wie die Membran umfasst.

3. Vorrichtung nach Anspruch 1, wobei die Membran aus einem Polymermaterial hergestellt ist, das anionisch leitfähig durch Hydroxylionen ist, wobei die kathodische katalytische Schicht einen Katalysator auf Basis von Oxiden von Ni, Co, Fe oder deren Mischungen und ein Polymerbindemittel derselben Beschaffenheit wie die Membran umfasst, und wobei die anodische katalytische Schicht einen Katalysator auf Basis von Oxiden von Cu, Co, Ni, Mn oder deren Mischungen und ein Polymerbindemittel derselben Beschaffenheit wie die Membran umfasst.

4. Vorrichtung nach einem der vorstehenden Ansprüche, wobei eine oder beide katalytischen Schichten direkt auf der Membran oder auf der Oberfläche der porösen Schichten auf beiden Seiten der Membran abgeschieden sind.

5. Vorrichtung nach einem der vorstehenden Ansprüche, wobei der wasserspeichernde hydrophile Zusatzstoff durch Kieselsäure ($SiO_2$) oder Titanoxid ($TiO_2$) oder Polyelektrolyte, wie Natriumpolyacrylate oder Celluloseether oder Methylcellulose oder Hydroxyethylmethylcellulose oder Hypromellose oder Hydroxypropylmethylcellulose (HPMC) oder bestimmte Tone auf Silikat- oder Aluminiumsilikatbasis oder Kombinationen davon ausgebildet ist.

6. Vorrichtung nach einem der vorstehenden Ansprüche, die eine oder mehrere PEM-Wasserelektrolysezellen und/oder eine oder mehrere AEM-Wasserelektrolysezellen enthält.

7. Vorrichtung nach einem der vorstehenden Ansprüche, wobei die Steuermittel konfiguriert sind, um zwischen den zwei Elektroden der mindestens einen Wasserelektrolysezelle (10) eine elektrische Potentialdifferenz in dem Bereich von 1,5 bis 3,0 V anzulegen, entsprechend einer Stromdichte zwischen 0 und 10 A/cm$^2$.

8. Verfahren zum Produzieren von gasförmigem Wasserstoff oder Sauerstoff bei einem kontrolliertem Feuchtigkeitsgehalt mittels mindestens einer Wasserelektrolysezelle (10), die eine ionenleitende Polymermembran aufweist und durch Diffusionstransport von Wasser durch die Membran angetrieben wird, das Verfahren umfassend die Schritte:

a) Zuführen von flüssigem Wasser in einen Wasserversorgungsraum der mindestens einen Wasserelektrolysezelle (10) gegenüber der Elektrode, an der die elektrolytische Zersetzung des Wassers stattfindet, und
b) Steuern der Stromdichte und des Wasserflusses, der in den Wasserversorgungsraum gepumpt wird, um den Feuchtigkeitsgehalt des gasförmigen Wasserstoffs oder Sauerstoffs an dem Auslass der mindestens einen Wasserelektrolysezelle (10) auf einen gewünschten Wert einzustellen, der zwischen 0 % und 100 % umfasst.

**Revendications**

1. Dispositif d'électrolyse destiné à la production d'hydrogène ou oxygène gazeux à un taux d'humidité commandé, le dispositif comprenant :

- au moins une cellule d'électrolyse d'eau (10) ayant une membrane polymère conductrice d'ions, ladite au moins une cellule d'électrolyse d'eau (10) étant actionnée par transport diffusionnel d'eau à travers ladite membrane,
- des moyens d'alimentation d'eau liquide permettant d'alimenter de l'eau liquide dans un compartiment d'alimentation en eau de ladite au moins une cellule d'électrolyse d'eau (10) opposé à l'électrode où une décomposition électrolytique de l'eau se déroule, et
- des moyens de commande configurés pour commander la densité de courant et l'écoulement d'eau pompé par lesdits moyens d'alimentation en eau dans ledit compartiment d'alimentation en eau pour ajuster le taux d'humidité dans l'hydrogène ou oxygène gazeux au niveau de la sortie de ladite au moins une cellule d'électrolyse d'eau (10) à une valeur souhaitée comprise entre 0 % et 100 %, dans lequel ladite au moins une cellule d'électrolyse d'eau (10) comporte, en plus de ladite membrane :

- un châssis fabriqué dans un matériau polymère technique non conducteur ayant des canaux de distribution et de collecte de fluide et des joints d'étanchéité,
- une couche catalytique cathodique et une couche catalytique anodique,
- une couche poreuse cathodique et une couche poreuse anodique,
- un espaceur poreux cathodique et un espaceur poreux anodique, et
- deux plaques d'extrémité bipolaires métalliques, et

dans lequel l'une ou/et l'autre des couches catalytiques contiennent un additif hydrophile de rétention d'eau.

2. Dispositif selon la revendication 1, dans lequel la membrane est fabriquée dans un matériau polymère conducteur de protons, dans lequel la couche catalytique cathodique comprend un catalyseur à base de platine et un liant polymère de la même nature chimique que ladite membrane, et dans lequel la couche catalytique anodique comprend un catalyseur à base d'oxyde d'iridium et un liant polymère de la même nature chimique que ladite membrane.

3. Dispositif selon la revendication 1, dans lequel la membrane est fabriquée dans un matériau polymère anioniquement conducteur par ions hydroxyle, dans lequel la couche catalytique cathodique comprend un catalyseur à base d'oxydes de Ni, Co, Fe ou leurs mélanges, et un liant polymère de la même nature que ladite membrane, et dans lequel la couche catalytique anodique comprend un catalyseur à base d'oxydes de Cu, Co, Ni, Mn ou leurs mélanges, et un liant polymère de la même nature que ladite membrane.

4. Dispositif selon l'une quelconque des revendications précédentes, dans lequel l'une ou/et l'autre des couches catalytiques sont déposées directement sur la membrane ou sur la surface de la couche poreuse de chaque côté de ladite membrane.

5. Dispositif selon l'une quelconque des revendications précédentes, dans lequel ledit additif hydrophile de rétention d'eau est formé par de la silice ($SiO_2$), ou de l'oxyde de titane ($TiO_2$), ou des polyélectrolytes tels que des polyacrylates de sodium, ou des éthers de cellulose, ou de la méthylcellulose, ou de l'hydoxyéthylméthylcellulose, ou de l'hypromellose ou de l'hydroxypropylméthylcellulose (HPMC), ou certaines argiles à base de silicate ou d'aluminosilicate, ou des combinaisons de ceux-ci.

6. Dispositif selon l'une quelconque des revendications précédentes, contenant une ou plusieurs cellules d'électrolyse d'eau PEM et/ou une ou plusieurs cellules d'électrolyse d'eau AEM.

7. Dispositif selon l'une quelconque des revendications précédentes, dans lequel lesdits moyens de commande sont configurés pour appliquer entre les deux électrodes de ladite au moins une cellule d'électrolyse d'eau (10) une différence de potentiel électrique dans la plage de 1,5 à 3,0 V, correspondant à une densité de courant entre 0 et 10 A/cm$^2$.

8. Procédé permettant de produire de l'hydrogène ou oxygène gazeux à un taux d'humidité commandé au moyen d'au moins une cellule d'électrolyse d'eau (10) qui a une membrane polymère conductrice d'ions et est actionnée par transport diffusionnel d'eau à travers ladite membrane, le procédé comprenant les étapes consistant à :

a) alimenter de l'eau liquide dans un compartiment d'alimentation en eau de ladite au moins une cellule d'électrolyse d'eau (10) opposé à l'électrode où une décomposition électrolytique de l'eau se déroule, et
b) commander la densité de courant et l'écoulement d'eau pompé dans ledit compartiment d'alimentation en eau pour ajuster le taux d'humidité dans l'hydrogène ou oxygène gazeux au niveau de la sortie de ladite au moins une cellule d'électrolyse d'eau (10) à une valeur souhaitée comprise entre 0 % et 100 %.

# FIG. 1

# FIG. 2

# FIG. 3

# FIG. 4

# FIG. 5

# FIG. 6

# FIG. 7

# FIG. 8

# FIG. 9

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2451992 B1
- US 2012241315 A
- US 6685821 B

**Non-patent literature cited in the description**

- **C. ROZAIN ; P. MILLET.** Electrochemical characterization of Polymer Electrolyte Membrane Water Electrolysis Cells. *Electrochimica Acta,* 2014, vol. 131, 160-167
- Hydrogen and Fuel Cells Primers. **D. BESSARABOV ; P. MILLET.** PEM Water Electrolysis. Elsevier, 2018
- **F. BARBIR.** PEM Fuel Cells. Elsevier, 2005, 45-47
- **A. VILLAGRA ; P. MILLET.** An analysis of PEM water electrolysis cells operating at elevated current densities. *Int. J. Hydrogen Energy,* 2019, vol. 44 (20), 9708-9717